(19) **Europäisches Patentamt / European Patent Office / Office européen des brevets**

(11) **EP 1 405 397 B1**

(12) **EUROPEAN PATENT SPECIFICATION**

(45) Date of publication and mention
of the grant of the patent:
**07.02.2007 Bulletin 2007/06**

(51) Int Cl.:
**H02M 3/335** (2006.01)

(21) Application number: **02738547.5**

(22) Date of filing: **20.06.2002**

(86) International application number:
**PCT/IB2002/002530**

(87) International publication number:
**WO 2003/003554 (09.01.2003 Gazette 2003/02)**

(54) **CURRENT MODE CONTROLLED SWITCHED MODE POWER SUPPLY**

IM STROMMODUS GESTEUERTES SCHALTNETZTEIL

ALIMENTATION EN MODE COMMUTE A COMMANDE DE COURANT

(84) Designated Contracting States:
**AT BE CH CY DE DK ES FI FR GB GR IE IT LI LU MC NL PT SE TR**

(30) Priority: **29.06.2001 EP 01202515**

(43) Date of publication of application:
**07.04.2004 Bulletin 2004/15**

(73) Proprietor: **Koninklijke Philips Electronics N.V.**
**5621 BA  Eindhoven (NL)**

(72) Inventor: **MOBERS, Antonius, M., G.**
**5656 AA Eindhoven (NL)**

(74) Representative: **Pennings, Johannes et al**
**NXP Semiconductors**
**Intellectual Property Department**
**High Tech Campus 60**
**5656 AG Eindhoven (NL)**

(56) References cited:
**EP-A- 0 584 656          WO-A-94/22207**
**US-A- 5 694 302          US-A- 5 986 897**

**Description**

The invention relates to a switched mode power supply incorporating current mode control functionality, to over current protection circuits for switched mode power supplies and to primary short circuit protection circuits.

US 5,986,897 discloses a circuit arrangement for use in a controller circuit of a switched mode power supply for turning on a power device in the switched mode power supply when a voltage across the power device is at a minimum. The circuit arrangement includes circuitry for detecting when a change in the voltage across the power device is substantially zero, and for detecting when the voltage across the power device is less than a predetermined level. When these two criteria are met, the circuit arrangement generates a turn-on signal for the power device.

EP 0,584,656 provides a simple current controlled switched mode power supply with leading edge blanking, slope compensation and voltage feed forward. A pulse width modulator provides a switch activation signal in response to slope compensation and voltage feed forward signal. A transformer converts an input signal from a power source to an output signal. A transistor switch allows current to flow in the transformer in response to the switch activation signal. The slope compensation and voltage feed forward signal is generated in proportion to the output signal and applied to the pulse width modulator.

WO 94/22207 discloses limiting the output current of a switched-mode power supply of flyback type in overload situations and to a switched-mode power supply of flyback type. The output current is limited by means of pulse width modulation by adjusting, by means of a control circuit known per se, the ratio of the duration of the ON and OFF phases of the switch of the primary circuit. In order for the output current not to increase inordinately in overload situations, the voltage which is present on the primary side of the transformer and which is dependent on the output voltage of the power supply is utilized to control a current generator, an output current of which is used to form a control signal for the control circuit.

US 5,694,302 describes a power conversion circuit, in which a flyback converter is modified with additional elements to provide both dissipationless snubbing and also input ripple cancellation.

In many known flyback converters (which are a type of switched mode power supply) primary current is directly utilized for current mode control operation and for over current protection. Direct sensing of the primary current takes place over a sensing resistor, with the protection level being arranged to be as close as possible to the saturation current of the relatively expensive transformer. Because the sense resistor is in the main primary current path, it is important to keep power dissipation within the resistor low. For this reason, the resistor value is maintained as low as possible and this, in turn, means that the voltage sensed across that resistor is also low. Sensing such a low voltage in a high power environment means that this sensed voltage is very sensitive to noise. This can also lead to problems with current mode control. Signals from parasitic capacitances, inductances etc. can disturb the sensed signal and sophisticated compensation is often required to provide proper and reliable operation. A detailed description of some of the problems of known current sensing converters will be given to help clarify the technical problems addressed by the present invention.

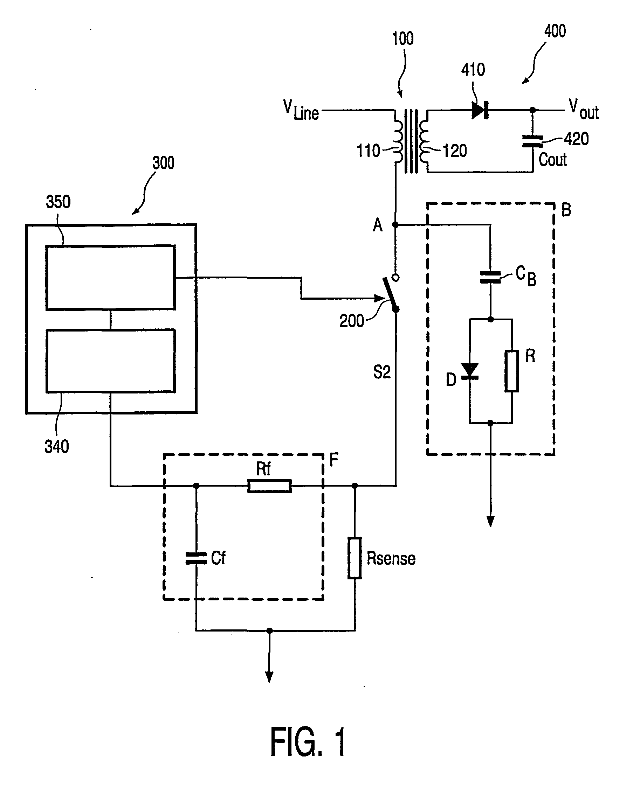

Fig. 1 shows part of a typical set up for a flyback converter using primary current sensing. In Fig. 1, there is shown a transformer 100, a power switch 200 (also referred to as S2), a switched mode power supply circuit 300, a sense resistor $R_{sense}$, a secondary side output circuit 400, a circuit block B and a filter block F. The transformer 100 comprises a primary winding 110 and a secondary winding 120. The primary winding 110 receives an input voltage $V_{Line}$ on one side and is further connected to a first terminal of the power switch S2 200. The secondary winding 120 of the transformer 100 is connected to the secondary side output circuit 400, which comprises a rectifying diode 410 and a stabilizing capacitor $C_{out}$ 420 to provide a rectified stabilized output voltage $V_{out}$.

Power switch S2 200, as mentioned above, has a first terminal connected to the primary winding 110. It has a second terminal connected to a first terminal of $R_{sense}$ and a control input which receives a switching control signal from the switched mode power supply circuit 300. A second terminal of $R_{Sense}$ is connected to ground.

Circuit block B is connected between the first terminal of S2 and ground and comprises a capacitor $C_B$, diode D and resistor R as shown.

The filter block F comprises a capacitor $C_F$ and a resistor $R_F$ in series. $C_F$ and $R_F$ are connected across $R_{Sense}$ and at their mid-point a "sense" connection to the switched mode power supply circuit 300 is made.

The switched mode power supply circuit comprises a switch controller 350 for controlling S2 and a circuit 340 for providing current controlled operation via $R_{sense}$ and ancillary functions such as leading edge blanking and over current protection.

The operation of the circuit of Fig. 1 will now be described. The primary current is sensed over $R_{Sense}$, with the leading edge blanking/over current protection (LEB/OCP) block comparing the voltage across $R_{Sense}$ to both a control level [hereinafter referred to as $v_{Control}$] and an over current level [hereinafter referred to as $v_{Protection}$]; $v_{protection}$ is necessarily greater than $V_{control}$. For simplicity, it will be assumed that the converter of Fig. 1 operates as a fixed frequency converter, however the principles described apply equally to other power supply converter topologies.

In practice, S2 is often (but not limited to) a power MOSFET with the first terminal being a source terminal, second terminal being a drain and the control input a gate.

In a fixed frequency converter, a primary stroke is started (i.e. S2 turned on) at regular time intervals, and the secondary stroke starts (i.e. S2 turned off) when $v_{Sense}$ first becomes equal to $V_{Control}$. Altering the timing of the start of the secondary stroke by varying $V_{Control}$ allows the power output of the converter to be controlled.

The circuit block B, in particular capacitor $C_B$, limits $dv_{drain}/dt$ as S2 switches. This is necessary to reduce electromagnetic interference (EMI) from switching transients that may be harmful to other nearby circuitry. Unfortunately, parasitic inductances form with the same $C_B$ a resonant circuit, which causes a damped oscillatory current to flow in $R_{sense}$ at the commencement of the primary stroke. The oscillations in $V_{sense}$ are superimposed on the desired ramp, and peaks in the oscillations may cause the premature commencement of the secondary stroke if $V_{Sense}$ exceeds $V_{Control}$ before the expected time. In addition, it is possible that the initial peak of the $V_{sense}$ oscillation may exceed $V_{protection}$ as well as $V_{Control}$. To avoid premature switch off problems in the timing of the commencement of the secondary stroke, the LEB/OCP block 360 carries out leading edge blanking, LEB. LEB causes the signal on $R_{sense}$ to be ignored for a fraction of the switching frequency after commencement of the primary stroke. The use of LEB has the disadvantage that no load and low power operation are hindered, since the LEB time ("on" time of S2) determines the minimum power level.

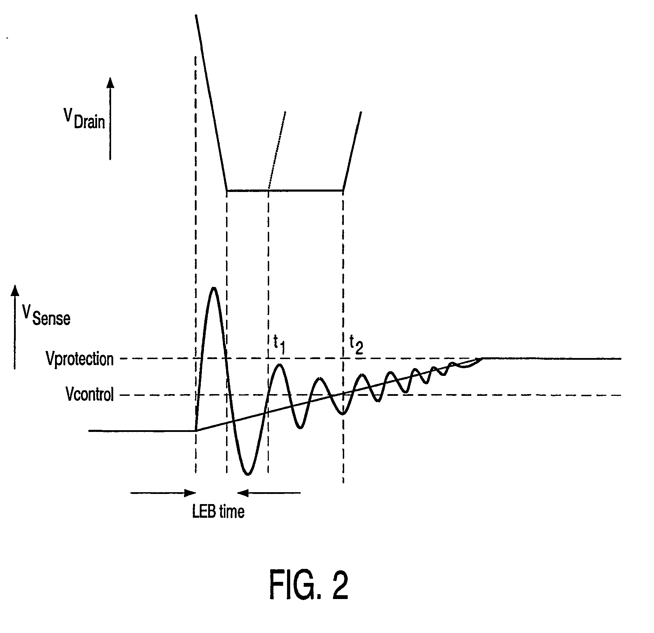

The lower trace shown in Fig. 2 illustrates how the voltage $V_{sense}$ varies over time in relation to $V_{Drain}$, (the upper trace of Fig. 2). The steady ramp voltage of the lower trace represents the idealized case, whereas the ringing shows what actually occurs at $V_{sense}$ under the oscillatory conditions described above. Here it can be seen that the initial oscillation clearly rises above $V_{protection}$ (and in the absence of LEB would cause premature switch off). At a time point shown as $t_1$, the oscillations can be above $V_{control}$ which would cause premature termination (indicated by the broken line of the upper trace) of the primary stroke under current controlled mode. Such oscillations after the LEB interval, cause premature commencement of the secondary stroke as $V_{sense}$ approaches $V_{control}$. To reduce this problem of jitter, the filter F comprising resistor $R_f$ and capacitor $C_f$ is employed to ensure the oscillations are sufficiently damped as $V_{sense}$ approaches $V_{control}$ and have the aim of enabling termination of the primary/ commencement of the secondary at the correct time point $t_2$.

Even if $C_B$ were not present, parasitic capacitances in the primary, secondary or elsewhere can cause the same problems.

It is an aim of the present invention to provide an improved switched mode power supply. To this end, the invention provides a current mode controlled switched mode power supply as defined by the independent claims. The dependent claims define advantageous embodiments. It is an aim of preferred embodiments of the present invention to provide a switched mode power supply incorporating stable and simplified current mode control functionality.

The isolation provided for by the present invention yields the benefits of avoiding the jitter and leading edge blanking problems associated with the prior art. The input current is also indicative of the line voltage. The input current is provided by an auxiliary winding of a switched mode power supply. The pulse width modulator may comprise a comparator.

Preferably, the voltage increasing over time comprises a ramp voltage. This voltage emulates the form of the primary current.

The switched mode power supply may also comprise over current protection. The over current protection may comprise a protection voltage input to a comparator, the comparator being arranged to provide an output signifying the presence of an over current condition to the switch controller if the voltage varying over time exceeds the protection voltage. Upon detection of such an over current condition, the switch controller is preferably arranged to discontinue flow of the primary current in the switched mode power supply.

The switched mode power supply may still further comprise a primary short circuit protection circuit. The primary short circuit protection circuit may comprise a buffer means for buffering a reference current, a delay circuit and a set/ startup latch which may be set in response to the absence of the input current, the setting of set/startup latch by the delay circuit signifying the presence of a primary short circuit condition to the switch controller. Preferably, the buffer means comprises a third current mirror. The third current mirror is preferably arranged to provide a buffered reference current. Preferably, the delay circuit may comprise a filter or any other suitable circuitry.

For a better understanding of the invention, and to show how embodiments of the same may be carried into effect, reference will now be made, by way of example, to the accompanying diagrammatic drawings in which:

Fig. 1 illustrates an example of a prior art switched mode power supply;
Fig. 2 illustrates how oscillations in $V_{sense}$ can cause jitter in the timing of the commencement of the secondary stroke;
Fig. 3 illustrates in schematic form a switched mode power supply in accordance with an embodiment of the invention;
Fig. 4 illustrates the variations of $V_{AUX}$ with time over a switching cycle;
Fig. 5 illustrates detail of control and protection circuitry of the switched mode power supply of Fig. 3, and;
Fig. 6 illustrates a voltage varying over time which, in accordance with embodiments of the present invention, is utilized to provide the current controlled operation of an SMPS.

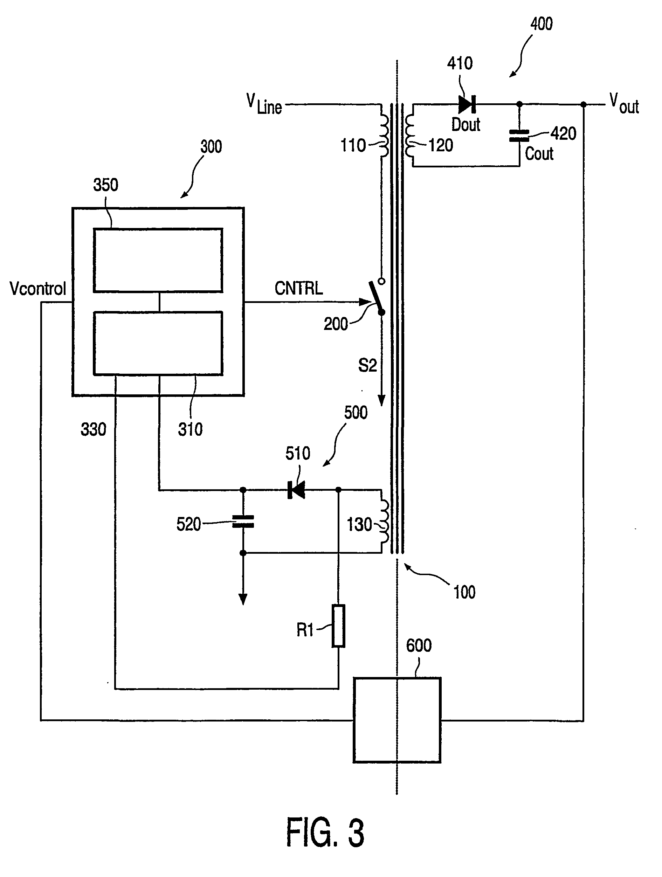

Referring to Fig. 3, there is shown in schematic form a switched mode power supply comprising a transformer 100, a power switch 200, a switched mode power supply circuit 300, secondary side output circuit 400 an auxiliary output circuit 500, a $V_{out}$ control means 600 for providing a control signal $V_{control}$ which is dependant upon, but isolated from, the secondary side output voltage $V_{out}$.

The transformer 100 has a primary winding 110, a secondary winding 120 and an auxiliary winding 130. The secondary winding 120 is connected to the secondary side output circuit 400 which comprises rectifying means 410 and a voltage stabilizing means 420, shown here respectively as a diode $D_{out}$ and capacitor $C_{out}$.

The primary winding 110 receives an input voltage $V_{LINE}$ which is switched by the power switch 200 under the control of a control output CNTRL of the switched mode power supply controller 300. Typically, the power switch 200 is a power MOSFET.

The auxiliary winding 130 of the transformer 100 is a power and sense winding which delivers a rectified voltage by means of the auxiliary output circuit 500. The auxiliary output circuit 500 comprises auxiliary voltage rectifier 510 and auxiliary voltage stabilizer 520 that comprise, respectively, a diode $D_{aux}$ and a capacitor $C_{aux}$. Resistor $R_1$ is a sense resistor for sensing the auxiliary voltage and has a first end connected to the auxiliary winding 130 and a second end connected to a terminal 330 of the switched mode power supply 300.

The switched mode power supply IC 300 comprises a switch controller 350 and a current mode control and current protection circuit 310.

$V_{out}$ control means 600 regulates the secondary side output voltage and also generates control voltage $V_{control}$ for use within the switched mode power supply. The $V_{out}$ control means 600 isolates the primary side from the secondary side functions, for instance, by means of an opto-coupler.

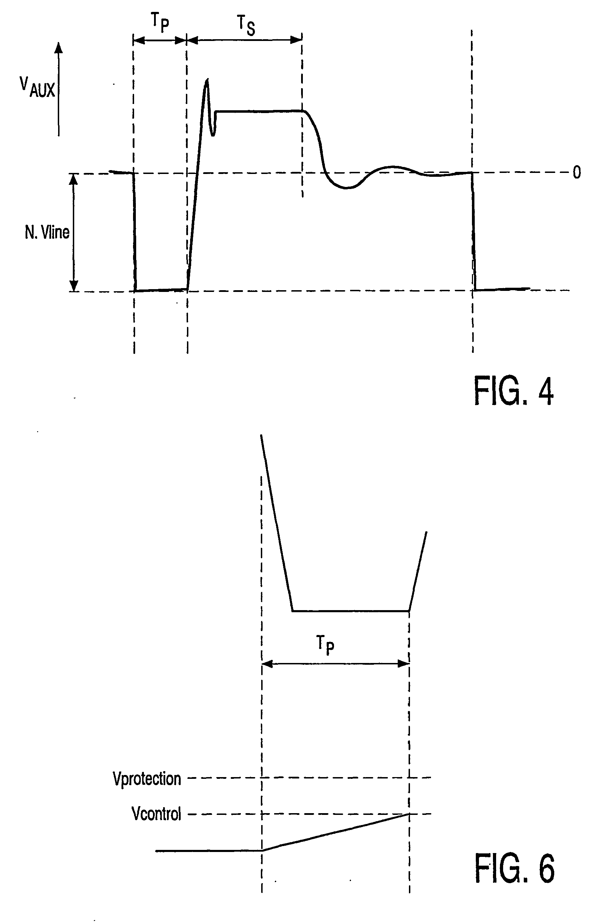

Variation of $V_{AUX}$ over time is shown in Fig. 4. Here, the primary stroke is designated by time period $T_P$ and the secondary stroke by period $T_S$.

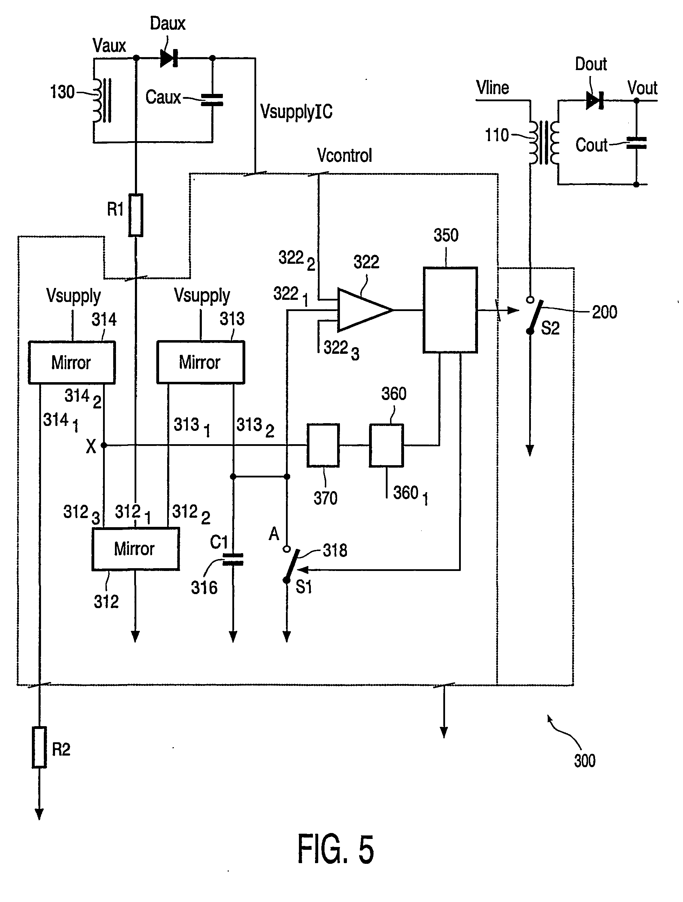

Referring to Fig. 5, the current mode control current and protection circuit 310 comprises input current buffer means composed of first and second current mirrors 312, 313, voltage control means comprising a capacitor 316 (also referred to hereinafter as C1), a switch 318 (also referred to as S1) and a comparator 322.

There is also provided a primary short circuit protection circuit comprising a buffer in the form of a third current mirror 314, a delay element 370 and a reset/startup latch 360. Resistances R1 and R2 shown are, typically, discrete components. The transformer and related elements correspond to those elements already described in relation to Fig. 3.

In Fig. 5, $V_{out}$ control means 600 has been omitted for the sake of clarity. However, the control signal $V_{control}$ and its connection to the current mode control and protection circuit 310 is shown.

The detailed construction of the circuit of Fig. 5 will now be described. As already noted, resistor R1 has a first terminal connected to the auxiliary winding 130. The second end of R1 is connected to a first input $312_1$ of first current mirror 312. The current mirror 312 provides a mirror current output at terminal $312_2$. For accuracy reasons the voltage at $312_1$ must be near to ground level. In this way, the current flowing in resistor R1 (hereinafter referred to as $I_{R1}$) is reflected once by the current mirror 312. This reflected current is input to a first input terminal $313_1$ of the second current mirror 313. In turn, this current is reflected once more in the output of the second current mirror at $313_2$. The current at output $313_2$ is, it will be understood a current having the same polarity as the current $I_{R1}$ flowing through resistor R1. The pair of current mirrors 312, 314 thereby provides a buffered current with voltage and current correction. The current $I_{R1}$ emulates the line voltage $V_{line}$. The following equation holds:

$$I_{R1} = \frac{\mathbf{V}_{aux} - V_{312_1}}{R1} \approx \frac{V_{aux}}{R1} = \frac{N \cdot V_{LINE}}{R1},$$

*where N is the turns ratio between the primary winding and the auxiliary winding.*

The output $313_2$ of the second current mirror 313 is connected to a first end of capacitor C1 316, the other end of capacitor C1 316 being connected to ground. The first end of capacitor C1 is also connected to a switched terminal of switch S1 318. Switch S1 is a make or break switch which selectively switches the first end of capacitor C1 316 to ground in accordance with a control output of switch controller 350. The voltage $V_{c1}$ at switch S1 varies in accordance with:

$$\frac{dV_{C1}}{dt} = \frac{I_{R1}}{C1} = \frac{N.V_{Line}}{C1} = K_1.V_{Line}$$

$$K_1 = \frac{N}{C1} \quad \text{which is constant for a certain application.}$$

If we compare this to a case using a sense resistor as in the prior art then:

$$K_2 = \frac{R_{Sense}}{L_p} \quad \text{which is constant for all applications.}$$
$$\frac{dV_{Sense}}{dt} = \frac{d.I_{Sense}.R_{Sense}}{dt} = \frac{V_{Line}.R_{Sense}}{L_p} = K_2.V_{Line}$$

It can therefore be seen that the voltage $V_{c1}$ is a ramp voltage varying over time, which emulates the idealized $V_{Sense}$ voltage of the prior art representing the varying primary current over time. This is illustrated in Fig. 6.

The first end of capacitor C1 316 is also connected to a first input $322_1$ of the comparator 322, which has a second input $322_2$ for receiving a control voltage $V_{control}$ and a third input $322_3$ for receiving an output over voltage level signifying signal $V_{protection}$ (which may be generated either internally or externally to the circuit 310). The comparator 322 provides a signal to switch controller 350 output for selectively causing the power switch 200 to open and S1 to close. It will be understood that whilst element 322 is shown as and referred to as a single comparator, it may represent a number of comparators.

First current mirror 312 also provides a second mirrored current $312_3$ which is connected to an output $314_2$ of third current mirror 314 and to delay element 370. A current input $314_1$, of third current mirror 314 passes through a resistance R2 and represents a minimum permissible $V_{Line}$ level. The output of delay element 370 is fed to set/startup latch 360. Set/startup latch 360 also receives a reset signal $360_1$ at startup, and is connected to switch controller 350.

Operation of the circuit of Figs. 3 and 5 will now be described. In accordance with the general principles of switched mode power supplies, the switching is applied to a power switch for selectively allowing or inhibiting primary current flow. According to application, this switching is carried out at a given frequency, and with given time periods for the primary and secondary strokes. The period during which power is flowing is referred to as the primary stroke. In fixed frequency fly back converters, this primary stroke starts after a particular elapsed period of time. In other types of switched mode power supplies, such as self-oscillating power supplies, the primary stroke starts on the basis of a sensed voltage.

In general, the switch controller 350 of the switched mode power supply 300 switches the power switch 200 and S 1 as desired. When the power switch 200 is closed, it will be appreciated that voltage $v_{aux}$ is generated in the auxiliary winding 130. Generation of voltage $v_{aux}$ causes an emulation current $I_{R1}$ to flow through resistor R1 and to charge, via current mirrors 312, 313 the capacitor 316. At this point in time, while capacitor 316 is charging, switch S1 is open. Indeed, the switch controller 350 is arranged to control switching of switch S1 according to internal information gathered by the switched mode power supply 300. In particular, the drive to the control input of switch S1 318 is the inverse of the drive supplied to switch S2 by the switching part 350. By this we mean, that under normal operation, when S2 is closed, S1 is open and when S2 opens, S1 is closed.

From the above description, it will be appreciated that the emulation current $I_{R1}$ charges capacitor C1 316 so that its first terminal charges from zero volts, to approach $V_{control}$. There is therefore a ramping voltage on the first input $322_1$ of comparator 322 that functions as a pulse width modulator. The capacitor C1 316 is responsive to the input current to provide a voltage varying over time to the comparator/pulse width modulator 322. Pulse width modulator 322 has a second input $322_2$ that is attached to control voltage $V_{control}$. In this manner, should the voltage $v_{c1}$ appearing at the first terminal of capacitor C1 316 rise above $V_{control}$, then the comparator 322 is arranged to change from a first state to a second state, thereby providing a signal to switch controller 350. In response to such a signal switch controller operates S1 and S2 to discharge C1 and start the secondary stroke.

The switch controller 350 in combination with the switch S1 provide reset means for resetting the voltage developed across C1 to zero at the end of the primary stroke.

From the above description, and considering the voltage trace of Fig. 6 (which shows the potential at node A of Fig. 5 in analogous fashion to the trace of Fig. 3), it will be appreciated that by appropriate setting of $v_{control}$, the commencement of the secondary stroke caused by operation of the switch 200 is controllable and that this means that the SMPS has current mode control. It will also be appreciated that if primary current for any reason goes above a desired value (in particular approaching the saturation level of the transformer) then when the voltage first reaches the protection voltage $v_{protection}$, the power supply detects a primary over current and leaves the normal current flowing operation.

The operation of the primary short circuit protection circuitry will now be described.

During normal operation the input current is larger than the reference current and node X (the junction between current mirror outputs $312_3$, $314_2$ and the input to delay 370) is low indicating an inactive set signal.

In the event of a primary short circuit, no voltage will be induced on the auxiliary winding, and consequently no input current to the control circuitry will be produced. The mirrored current 3123 will also be absent. However, current will be flowing in such conditions from output $314_2$ of third current mirror 314. Because during a primary short the input current is lower than the reference current (i.e. the reflected $V_{line}$ level is lower than a reference level defined by R2), node X becomes high, such that an active signal is sent via the delay circuit 370 to the latch 360. The set/startup latch 360 indicates to the switch controller 350 that a primary short circuit has occurred and normal operation of the SMPS ceases. Disconnection of the line voltage and a subsequent power-on reset signal is needed to input $360_1$ of set/startup latch before allowing the switch controller 350 to resume normal operation.

The dashed boxes of Fig. 5 indicate portions of a switched mode power supply controller 300 that may be integrated in a single package. It will also be appreciated that the control and protection circuits could be provided on one chip/package, whilst a switching part 200 may be provided on another chip/package.

Resistor R1 is a discrete component which may be chosen in accordance with a turns ratio linking the primary winding 110 with the auxiliary winding 130. In this way, differing turns ratios can be accommodated, whilst a desired protection level may be set by a circuit designer or an end user as is appropriate.

In embodiments of the present invention, it will be appreciated that the voltage $V_{c1}$ has the same characteristic shape as the primary current and emulates this current, but the voltage $V_{c1}$ is not susceptible to disturbances in the same way as the sensing voltage over a conventional sense resistor. Further, a lack of disturbances to the voltage $V_{c1}$ avoids a potential source of jitter in the timing of the commencement of the secondary stroke. Moreover, operating signals are larger and not susceptible to noise. By using the teachings of the present invention to provide primary current protection, removal of the sense resistor is possible and the consequent dissipations in that sense resistor are avoided. For instance, for a 150-watt full range converter, such dissipations could be as high as 1 Watt at low line operation. Another advantage is that the power current path is smaller - limiting noise. Other circuitry such as the filter F of Fig. 1 that would be used to damp oscillations in a sensed voltage, or safety measure such as diodes placed in parallel to a sensing resistor can also be omitted. Another advantage for SMPS controllers incorporated into integrated circuit packages is that the sense voltage requires an additional connection to external components. The present invention may enable the number of integrated circuit pins to be reduced, therefore reducing cost.

To summarize, in arrangements of the present invention, as a result of the primary current being emulated, the real primary current is not measured. In the case of a short circuit of the primary winding, no voltage appears in the auxiliary winding and, thus, the operation of the power supply is terminated immediately and can only be reactivated after a line voltage disconnection has taken place.

Further advantages of embodiments of the invention are that certain external elements such as the filter F of Fig. 1 can be avoided and that the same connection pin of the package that is used for connection to R1 for current mode controlled operation is utilized for other functions such as the over current/ over voltage/ primary short circuit protection etc. Whilst not discussed herein, this same pin may also be utilized for demagnetization protection and /or output over voltage protection.

It will be appreciated by the man skilled in the art that numerous variations may be made which are still within the scope of the present invention. The transformer may have either more or less windings than shown. For instance, the auxiliary winding may be omitted and replaced by a further (buffered) connection from the primary winding 110. In another variation, the first and second current mirrors could be omitted and R1 coupled directly to C1. In practice however, buffers preferably in the form of mirrors are provided for accuracy and buffering reasons. R2 may be a discrete component or may be provided integrated onto the chip/ provided in the package. In other variations R2 may be replaced by an internal current source function. The scope of the present invention is thus limited only by the accompanying claims. In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. The invention can be implemented by means of hardware comprising several distinct elements, and by means of a suitably programmed computer. In the device claim enumerating several means, several of these means can be embodied by one and the same item of hardware. The mere fact that certain measures are recited in mutually different dependent claims does not indicate that a combination of these measures cannot be used to advantage.

## Claims

1. A switched mode power supply control circuit (300) comprising:

a switch controller (350) having an output coupled to a power switch control output of the circuit; and

a pulse width modulator (322) having an output coupled to said switch controller,

**characterized in that** the circuit (300) further comprises

means (316, 318) for providing a voltage increasing over time in response to an input current from an auxiliary winding input of the circuit (300), said means being arranged to be periodically reset, and **in that**

the pulse width modulator (322) has a first input coupled to receive the voltage increasing over time, and a second input connected to a control voltage, for providing a switch-off signal to the switch controller (350) when the voltage increasing over time reaches the control voltage.

2. A circuit according to claim 1, wherein the voltage increasing over time comprises a ramp voltage.

3. A circuit according to claim 1, wherein input current buffer means (312, 313) are provided for buffering the input current prior to processing by the means (316, 318) for providing a voltage increasing over time.

4. A circuit according to claim 3, wherein the input current buffer means comprise current mirroring means (312, 313) for receiving the input current and providing a buffered current to the means for providing a voltage increasing over time.

5. A circuit according to claim 4, wherein the current mirroring means comprise first (312) and second (313) current mirrors, the first current mirror being arranged to receive the input current and provide a first mirrored output, the second current mirror being arranged to receive the first mirrored output and provide a second current mirrored output forming the buffered current to the means (316, 318) for providing a voltage increasing over time.

6. A circuit according to claim 5, wherein the means for providing a voltage increasing over time comprise a capacitor (316) and reset means (318), the capacitor being charged by the buffered input current during periods in which the reset means is inactive.

7. A circuit according to claim 6, wherein the reset means (318) comprise a controlled switch arranged in parallel across the capacitor (316), the controlled switch being arranged to be active in a closed position in which the capacitor is shorted out and to be inactive in an open position so as to allow the capacitor to charge in accordance with the buffered input current.

8. A circuit according to claim 7, wherein the controlled switch (318) is selectively opened or closed in accordance with a desired frequency of a switched mode power supply, the switch being opened at the start of a primary stroke of the switched mode power supply and being closed at the end of a primary stroke of the switched mode power supply.

9. A circuit according to claim 8, wherein the controlled switch (318) and the power switch (200) open and close in opposition.

10. A circuit according to claim 1, wherein in a normal operation cycle of the switched mode power supply, the control voltage at the second input of the pulse width modulator (322) is arranged to dictate the timing of the discontinuation of the flow of the primary current.

11. The circuit of claim 1, further comprising over current protection, wherein a protection voltage is input to a comparator, the comparator being arranged to provide an output signifying the presence of an over current condition to the switch controller (350) if an input voltage of the comparator exceeds the protection voltage, the switch controller being arranged to discontinue flow of the primary current in the switched mode power supply.

12. The circuit of claim 1, further comprising a primary short circuit protection circuit comprising a buffer means (314) for buffering a reference current, a delay circuit (370) and a set/startup latch (360) which may be set in response to the reference current, the setting of set/startup latch by the delay circuit signifying the presence of a primary short circuit condition to the switch controller (350).

13. The circuit of claim 12, wherein the buffer means comprises a third current mirror (314) being arranged to provide a buffered reference current for providing a primary short winding detection.

14. A switched mode power supply comprising:

a transformer (100),
a power switch (200) in series with a primary winding (110) of the transformer, and
the circuit (300) of claim 1 for controlling the power switch, an auxiliary winding (130) of the transformer being coupled to the auxiliary winding input of the circuit (300).

**Patentansprüche**

1. Steuerschaltung (300) für ein Schaltnetzteil, die Folgendes umfasst:

   einen Schaltcontroller (350) mit einem an einen Leistungsschalter-Steuerausgang der Schaltung gekoppelten Ausgang; und
   einen Pulsbreitenmodulator (322) mit einem an genannten Schaltcontroller gekoppelten Ausgang,
   **dadurch gekennzeichnet, dass** die Schaltung (300) weiter Folgendes umfasst:

   Mittel (316, 318) zum Bereitstellen einer Spannung, die als Antwort auf einen Eingangsstrom von einem Hilfswicklungseingang der Schaltung (300) über die Zeit ansteigt, wobei genannte Mittel ausgebildet sind, periodisch zurückgesetzt zu werden, und dass
   der Pulsbreitenmodulator (322) einen ersten Eingang, der gekoppelt ist, die über die Zeit ansteigende Spannung zu empfangen, und einen zweiten, an eine Steuerspannung gekoppelten Eingang hat, um ein Ausschaltsignal an den Schaltcontroller (350) zu liefern, wenn die über die Zeit ansteigende Spannung die Steuerspannung erreicht.

2. Schaltung nach Anspruch 1, in der die über die Zeit ansteigende Spannung eine linear ansteigende Spannung umfasst.

3. Schaltung nach Anspruch 1, in der Eingansstrom-Puffermittel (312, 313) bereitgestellt sind, um den Eingangsstrom vor der Verarbeitung durch die Mittel (316, 318) zum Bereitstellen einer über die Zeit ansteigenden Spannung zu puffern.

4. Schaltung nach Anspruch 3, in der die Eingansstrom-Puffermittel Strom spiegelnde Mittel (312, 313) zum Empfangen des Eingangsstroms und Bereitstellen eines gepufferten Stroms an die Mittel zum Bereitstellen einer über die Zeit ansteigenden Spannung umfassen.

5. Schaltung nach Anspruch 4, in der die Strom spiegelnden Mittel erste (312) und zweite (313) Stromspiegel umfassen, wobei der erste Stromspiegel ausgebildet ist, den Eingangsstrom zu empfangen und einen ersten gespiegelten Ausgangsstrom bereitzustellen, und der zweite Stromspiegel ausgebildet ist, den ersten gespiegelten Ausgangsstrom zu empfangen und einen zweiten gespiegelten Ausgangsstrom, der den gepufferten Strom bildet, an die Mittel (316, 318) zum Liefern einer über die Zeit ansteigenden Spannung bereitzustellen.

6. Schaltung nach Anspruch 5, in der die Mittel zum Liefern einer über die Zeit ansteigenden Spannung einen Kondensator (316) und Rücksetzmittel (318) umfassen, wobei der Kondensator während Zeitabschnitten, in denen die Rücksetzmittel inaktiv sind, von dem gepufferten Strom aufgeladen wird.

7. Schaltung nach Anspruch 6, in der die Rücksetzmittel (318) einen gesteuerten Schalter umfassen, der parallel zu dem Kondensator (316) angeordnet ist, wobei der gesteuerte Schalter ausgebildet ist, in einer geschlossenen Stellung, in der der Kondensator kurzgeschlossen ist, aktiv zu sein und in einer offenen Stellung inaktiv zu sein, um so zu erlauben, dass der Kondensator entsprechend dem gepufferten Eingangsstrom aufgeladen wird.

8. Schaltung nach Anspruch 7, in der der gesteuerte Schalter (318) entsprechend einer gewünschten Frequenz eines Schaltnetzteils selektiv geöffnet oder geschlossen wird, wobei der Schalter zu Beginn eines Haupttaktes des Schaltnetzteils geöffnet wird und am Ende des Haupttaktes des Schaltnetzteils geschlossen wird.

9. Schaltung nach Anspruch 8, in der der gesteuerte Schalter (318) und der Netzschalter (200) im Gegentakt öffnen und schließen.

10. Schaltung nach Anspruch 1, in der in einem normalen Betriebszyklus des Schaltnetzteils die Steuerspannung an dem zweiten Eingang des Pulsbreitenmodulators (322) ausgebildet ist, das Timing des Aussetzens des primären Stromflusses zu diktieren.

**11.** Schaltung nach Anspruch 1, die weiter Überstromschutz umfasst, in dem eine Schutzspannung in einen Komparator gegeben wird, wobei der Komparator ausgebildet ist, ein Ausgangssignal, das das Vorhandensein eines Überstromzustands signalisiert, an den Schaltercontroller (350) zu liefern, wenn eine Eingangsspannung des Komparators die Schutzspannung übersteigt, wobei der Schaltercontroller ausgebildet ist, den Primärstromfluss in dem Schaltnetzteil auszusetzen.

**12.** Schaltung nach Anspruch 1, die weiter eine primäre Kurzschlussschutzschaltung umfasst, die Puffermittel (314) zum Puffern eines Referenzstroms, eine Verzögerungsschaltung (370) und ein Setz/Start-Latch (369), was als Antwort auf den Referenzstrom gesetzt werden kann, wobei das Setzten des Setz/Start-Latches durch die Verzögerungsschaltung das Vorhandensein eines primären Kurzschlusszustands an den Schaltercontroller (350) signalisiert, umfasst.

**13.** Schaltung nach Anspruch 12, in der die Puffermittel einen dritten Stromspiegel (314) umfassen, der ausgebildet ist, einen gepufferten Referenzstrom zum Bereitstellen einer Detektion einer primären kurzgeschlossenen Windung zu liefern.

**14.** Schaltnetzteil mit:

einem Transformator (100),
einem Leistungsschalter (200) in Reihe mit einer Primärwicklung (110) des Transformators, und
der Schaltung (300) nach Anspruch 1 zum Steuern des Leistungsschalters, wobei eine Hilfswicklung (130) des Transformators an den Hilfswicklungseingang der Schaltung (300) gekoppelt ist.

**Revendications**

**1.** Circuit de commande d'alimentation à mode commuté (300) comprenant :

- une unité de commande de commutation (350) ayant une sortie reliée à une sortie de commande de commutation de puissance du circuit ; et
- un modulateur d'impulsions en largeur (322) ayant une sortie reliée à ladite unité de commande de commutation,

**caractérisé en ce que** le circuit (300) comprend en outre:

- des moyens (316, 318) pour fournir une tension croissant au cours du temps en réponse à un courant d'entrée provenant d'une entrée d'enroulement auxiliaire du circuit (300), lesdits moyens étant conçus pour être périodiquement réinitialisés, et **en ce que** :

- le modulateur d'impulsions en largeur (322) a une première entrée reliée pour recevoir la tension croissant au cours du temps et une deuxième entrée connectée à une tension de commande, pour fournir un signal d'ouverture de commutateur à l'unité de commande de commutation (350) lorsque la tension croissant au cours du temps atteint la tension de commande.

**2.** Circuit selon la revendication 1, **caractérisé en ce que** la tension croissant au cours du temps comprend une tension de rampe.

**3.** Circuit selon la revendication 1, **caractérisé en ce que** des moyens formant tampon de courant d'entrée (312, 313) sont prévus pour mettre en tampon le courant d'entrée avant le traitement effectué par le moyen (316, 318) de fourniture d'une tension croissant au cours du temps.

**4.** Circuit selon la revendication 3, **caractérisé en ce que** les moyens formant tampon de courant d'entrée comprennent des moyens formant miroirs de courant (312, 313) pour recevoir le courant d'entrée et fournir un courant mis en tampon au moyen de fourniture d'une tension croissant au cours du temps.

**5.** Circuit selon la revendication 4, **caractérisé en ce que** les moyens formant miroirs de courant comprennent des premier (312) et deuxième (313) miroirs de courant, le premier miroir de courant étant configuré pour recevoir le courant d'entrée et fournir une première sortie réfléchie en miroir, le deuxième miroir de courant étant conçu pour recevoir la première sortie réfléchie en miroir et fournir une deuxième sortie de courant réfléchie en miroir formant le courant mis en tampon au moyen (316, 318) fournissant une tension croissant au cours du temps.

**6.** Circuit selon la revendication 5, **caractérisé en ce que** les moyens de fourniture d'une tension croissant au cours du temps comprennent un condensateur (316) et un moyen de réinitialisation (318), le condensateur étant chargé par le courant d'entrée mis en tampon pendant des périodes au cours desquelles le moyen de réinitialisation est inactif.

**7.** Circuit selon la revendication 6, **caractérisé en ce que** les moyens de réinitialisation (318) comprennent un commutateur commandé agencé en parallèle aux bornes du condensateur (316), le commutateur commandé étant conçu pour être actif dans une position fermée à laquelle le condensateur est court-circuité et pour être inactif dans une position ouverte de façon à permettre au condensateur de se charger en fonction du courant d'entrée mis en tampon.

**8.** Circuit selon la revendication 7, **caractérisé en ce que** le commutateur commandé (318) est sélectivement ouvert ou fermé en fonction d'une fréquence souhaitée d'une alimentation à mode commuté, le commutateur étant ouvert au début d'une course primaire de l'alimentation à mode commuté et étant fermé à la fin d'une course primaire de l'alimentation à mode commuté.

**9.** Circuit selon la revendication 8, **caractérisé en ce que** le commutateur commandé (318) et le commutateur de puissance (200) s'ouvrent et se ferment en opposition.

**10.** Circuit selon la revendication 1, **caractérisé en ce que** lors d'un cycle de fonctionnement normal de l'alimentation à mode commuté, la tension de commande sur la deuxième entrée du modulateur d'impulsions en largeur (322) est conçue pour imposer les instants d'interruption du passage du courant primaire.

**11.** Circuit selon la revendication 1, comprenant en outre une protection contre les surintensités, **caractérisé en ce qu'**une tension de protection est fournie à un comparateur, le comparateur étant conçu pour fournir une sortie représentative de la présence d'un état de surintensité à l'unité de commande de commutation (350) si une tension d'entrée du comparateur dépasse la tension de protection, l'unité de commande de commutation étant conçue pour interrompre le passage du courant primaire dans l'alimentation à mode commuté.

**12.** Circuit selon la revendication 1, comprenant en outre un circuit de protection contre les courts-circuits primaires comprenant un moyen tampon (314) pour mettre en tampon un courant de référence, un circuit à retard (370) et un registre à verrouillage de positionnement/démarrage (360) qui peut être positionné en réponse au courant de référence, le positionnement du registre à verrouillage de positionnement/démarrage par le circuit à retard étant représentatif de la présence d'un état de court-circuit primaire pour l'unité de commande de commutation (350).

**13.** Circuit selon la revendication 12, **caractérisé en ce que** le moyen tampon comprend un troisième miroir de courant (314) conçu pour fournir un courant de référence mis en tampon permettant d'assurer une détection de court-circuit d'enroulement primaire.

**14.** Alimentation à mode commuté, comprenant :

- un transformateur (100),
- un commutateur de puissance (200) en série avec un enroulement primaire (110) du transformateur, et
- le circuit (300) de la revendication 1 pour commander le commutateur de puissance, un enroulement auxiliaire (130) du transformateur étant relié à l'entrée d'enroulement auxiliaire du circuit (300).

FIG. 1

FIG. 2

FIG. 3

FIG. 4

FIG. 6

FIG. 5